# EUROPÄISCHE PATENTSCHRIFT

(11) **EP 1 068 797 B1**
(45) Veröffentlichungstag und Bekanntmachung des Hinweises auf die Patenterteilung: **12.04.2006**
(21) Anmeldenummer: 00109724.5
(22) Anmeldetag: 08.05.2000
(51) Int. Cl.: A01D 90/10, A01K 5/00, B01F 15/02

(54) **Vorrichtung zum Mischen und Austragen von Schüttgut**
Device for mixing and delivering fodder
Dispositif de mélange et de distribution d'alimentation

(30) Priorität: 13.07.1999 DE 29912227 U
(43) Veröffentlichungstag der Anmeldung: 17.01.2001
(73) Patentinhaber: Trioliet Mullos B.V., 7575 BE Oldenzaal (NL)
(72) Erfinder: Van Der Plas, Nicolaas, 7576 WB Oldenzaal (NL)
(74) Vertreter: Grünecker, Kinkeldey, Stockmair & Schwanhäusser Anwaltssozietät

(56) Entgegenhaltungen:
- EP-A- 0 427 483
- DE-A- 19 605 591
- DE-U- 29 820 836
- DE-U- 29 900 199

## Beschreibung

Die Erfindung betrifft eine Vorrichtung der im Oberbegriff des Anspruchs 1 bekannten Art.

Bei der aus DE-U-299 001 99 bekannten Vorrichtung wird jede als Schutzelement dienende Verschlussklappe über einen Hydraulik- oder Pneumatikzylinder betätigt. Die oben schwenkbar gelagerte Verschlussklappe ist beiderseits über Faltenbälge mit den Behälterseitenwänden verbunden. Da die Verschlussklappe in einer kontinuierlichen Bewegung geöffnet wird, gegebenenfalls synchron mit der Öffnungsbewegung des Dosierschiebers, ist der Dosierschieber fast in seiner vollen Öffnungsstellung, wenn die Verschlussklappe ihre volle Aufschwenkstellung erreicht. Wenn der Dosierschieber seinen anfänglichen Öffnungshub macht, befindet sich der Unterrand der Verschlussklappe noch relativ nahe beim Aufnahmebehälter, so dass dann durch die Öffnung unterhalb des Dosierschiebers mit der Hand in den Arbeitsbereich des Misch- und Förderelementes gegriffen werden kann. Dies bedeutet eine erhebliche und nicht den Vorschriften entsprechende Betriebsgefahr. Ferner kann die nur langsam aufgehende Verschlussklappe den Austrag des Schüttguts behindern.

In der DE-U-298 20 836 mit älterem Zeitrang wird vorgeschlagen, vor der Austragöffnung eine Schutzhaube verstellbar anzubringen, deren Bewegung zwischen der Ruhe- und der Schutzstellung in Abhängigkeit von der Bewegung des Dosierschiebers gesteuert wird. Es ist ein Steuermechanismus vorgesehen, mit dem bei einem anfänglichen Öffnungshub des Dosierschiebers die Schutzhaube zunächst in ihrer Ruhestellung vor der Austragöffnung verbleibt Dabei öffnet der Dosierschieber bereits einen Teil der Austragöffnung. Erst nachdem der Dosierschieber einen Öffnungshub durchfahren hat, der dem Abstand zwischen den Enden einer Langlochführung entspricht, wird die Schutzhaube allmählich und mit der Weiterbewegung des Dosierschiebers in die Schutzstellung verstellt.

Weiterer Stand der Technik ist enthalten in EP 0 427 483 A und DE 196 05 591 A.

Der Erfindung liegt die Aufgabe zugrunde, eine Vorrichtung der eingangs genannten Art zu schaffen, bei der die Betriebsgefahr beim Ausstellen des Schutzelements reduziert und eine Behinderung des Schüttgut-Austrags durch das Schutzelement vermieden wird.

Die gestellte Aufgabe wird mit den Merkmalen des Anspruchs 1 gelöst.

Beim Öffnen des Dosierschiebers betätigt der Zwangsbetätigungsmechanismus das beispielsweise als Verschlussklappe ausgebildete Schutzelement aktiv so, dass die Verschlussklappe in einer von der Bewegung des Dosierschiebers weitestgehend unabhängigen raschen und zügigen Bewegung sofort in die volle Öffnungsstellung gebracht und in dieser gehalten wird. Sobald der Dosierschieber nach dem anfänglichen Öffnungshub eine Öffnung bildet, durch die von außen zum Misch- und Förderelement gegriffen werden könnte, befindet sich die Verschlussklappe bereits in ihrer vollen Öffnungsstellung, in der z.B. ihr Unterrand einen so großen Sicherheitsabstand zum Förder- und Mischelement hat, dass die von dem rotierenden Misch- und Förderelement ausgehende Betriebsgefahr deutlich verringert ist Außerdem wird durch das rasche zwangsweise Bewegen der Verschlussklappe in ihre volle Öffnungsstellung vermieden, dass sie ein Schüttgut-Austrag stört, so dass keine Verstopfungen auftreten. Mit anderen Worten wird dank der Zwangsbetätigung die Verschlussklappe voreilend zu der und rascher als die Öffnungsbewegung des Dosierschiebers zwangsweise voll geöffnet und nacheilend zum und dafür rascher als der Dosierschieber geschlossen.

Dabei kann das Schutzelement eine unten ausschwenkbare Verschlussklappe sein, oder eine parallel zu sich abdrückbare Platte oder ein Gitter, etc.

Besonders zweckmäßig befindet sich die Verschlussklappen-Unterkante in der vollen Aufschwenkposition der Verschlussklappe in mindestens einem vorschriftsgemäßen Sicherheitsabstand von dem hinter der Austragöffnung positionierten Förder- und Mischelement, sobald und solange der Dosierschieber eine Öffnung freigibt, durch die mit der Hand ins Innere des Aufnahmebehälters gegriffen werden könnte. Dieser Abstand sollte zur Zeit aufgrund behördlicher Vorschriften mindestens 550 mm betragen.

Dabei könnte der Zwangsbetätigungsmechanismus grundsätzlich durch Einleiten der Verstellung des Dosierschiebers ausgelöst werden. Zweckmäßig ist es jedoch, den Zwangsbetätigungsmechanismus durch die Verstellvorrichtung oder den Dosierschieber zu betätigen, um die gewünschte Sicherheitsfunktion sicherzustellen.

Es ist zwar denkbar, die Auswurfklappe aus der vollen Aufschwenkstellung auf herkömmliche Weise wieder in die Schließstellung zu bringen. Zweckmäßiger ist es jedoch, den Zwangsbetätigungsmechanismus auch dazu zu nutzen, die Verschlussklappe wieder zu schließen.

Ein baulich einfacher und funktionssicherer Zwangsbetätigungsmechanismus arbeitet mit einer Öffnungsfeder und einem öffnungshebel sowie einer Mitnehmerkupplung, die die Öffnungs- bzw. Schließbewegung des Dosierschiebers überträgt. Die Verschlussklappe wird durch die Öffnungsfeder aktiv geöffnet, wobei der anfängliche kleine Öffnungshub des Dosierschiebers sozusagen als Auslöser fungiert. Die Öffnungsfeder hält die Verschlussklappe dann in der vollen Aufschwenkstellung.

Wenn sich der Öffnungshebel, der mit seinem innenliegenden Ende in etwa parallel zur Behälterwand geführt ist, und nach oben zur Verschlussklappe erstreckt, dann wird nicht nur der anfängliche Öffnungshub des Dosierschiebers sondem auch die Öffnungsbewegung der Öffnungsfeder ins Große übersetzt, so dass die Verschlussklappe in einem raschen Hub in die volle Öffnungsstellung geht, selbst wenn sich der Dosierschieber nur langsam bewegt.

Da sich das innenliegende Ende des Öffnungshebels auch in der vollen Aufschwenkstellung der Verschlussklappe nahe beim unteren Austragöffnungsrand befindet, wird für die Bewegungen der Verschlussklappe nur ein für die Sicherheitsfunktion wichtiger sehr kleiner, zulässiger Hub des Dosierschiebers, z.B. nur wenige Zentimeter, eingesetzt.

Um die Verschlussklappe in der vollen Aufschwenkstellung sicher festzuhalten, kann auch ein Aufschwenk-Begrenzungsanschlag vorgesehen sein.

Bei einer alternativen Ausführungsform besteht der Öffnungshebel aus zwei abknickbar miteinander verbundenen, an der Verschlussklappe und am Aufnahmebehälter jeweils schwenkbar gelagerten Hebelteilen, in deren Knickbereich die Öffnungsfeder angreift. Mit der Scherenbewegung dieser beiden Hebelteile wird eine zügige Aufschwenk- und ggfs. Zuschwenkbewegung der Verschlussklappe gesteuert. Außerdem halten die annähernd gestreckten Hebelteile die Verschlussklappe in der vollen Aufschwenkstellung stabil fest. Zweckmäßigerweise sind die Hebelteile in der annähernd gestreckten, der vollen Aufschwenkstellung entsprechenden Relativstellung aneinander mit einem geringfügigen Knick zur Zusammenfaltrichtung abgestützt, damit sie sich bei der Zuschwenkbewegung der Verschlussklappe, die über das Zugelement bewirkt wird, in die richtige Ausgangslage falten. Das Zugelement sollte relativ nahe an der Schwenkachse der Verschlussklappe angreifen, um diese erst relativ spät in die Zuschwenkstellung zu ziehen.

Besonders zweckmäßig ist es, unterhalb der Austragöffnung eine Ablenkklappe vorzusehen, die das Schüttgut nach dem Durchtritt durch die Austragöffnung nach außen leitet.

Diese Ablenkklappe sollte sich bei geschlossener Verschlussklappe in einer innenliegenden Position befinden und nur bei voll geöffneter Aufschwenklage der Verschlussklappe nach außen über die Außenkontur vorstehen, um die Fahrbreite in der Vorrichtung nicht unzweckmäßig zu erhöhen. Ist die Ablenkklappe wirkungsmäßig mit der Verschlussklappe oder deren Zwangsbetätigungsmechanismus verbunden, dann nimmt sie beim oder nach dem Aufschwenken der Verschlussklappe automatisch die äußere Position ein. Es ist jedoch auch möglich, die Ablenkklappe getrennt und nur bei Bedarf nach außen zu verstellen.

Eine schräge oder konvex gekrümmte Ablenkfläche an der Ablenkklappe leitet das Schüttgut ohne nennenswerten Austragswiderstand gleichmäßig und verteilend nach außen unten.

Baulich einfach ist es, die Ablenkklappe schwenkverstellbar anzuordnen und mit dem Zwangsbetätigungsmechanismus so zu kuppeln, dass die Bewegungen des Öffnungshebels auf einen Stellhebel übertragen werden, der die Ablenkklappe nach außen oder nach innen verschwenkt. Der Stellhebel kann in einem Langloch im Behälterboden geführt sein und übernimmt dann auch die Führung des unteren Endes des Öffnungshebels.

Wenn die Zuschwenkbewegung der Verschlussklappe relativ rasch erfolgt, ist es zweckmäßig, einen federnden Schließdämpfanschlag für die Verschlussklappe vorzusehen (Geräusch- und Verschleißminderung).

Aus Sicherheitsgründen ist es sehr vorteilhaft, wenn die Verschlussklappen-Unterkante auch in der vollen Aufschwenkstellung tiefer liegt als der innenliegende Boden des Aufnahmebehälters.

Günstig ist es ferner, den Dosierschieber an seinem unteren Rand mit einem schneidenartigen oder abgeschrägten Stanzrand auszubilden, damit er beim Schließen, insbesondere bei langfasrigem Schüttgut, den Schüttgutstrang abschneidet und problemlos seine Schließstellung erreicht, in der auch die Verschlussklappe in die volle Zuschwenkstellung gebracht ist.

Zweckmäßig sind an beiden Seiten der Austragöffnung Zwangsbetätigüngsmechanismen für die Verschlussklappe vorgesehen.

Um wahlweise Schüttgut zur einen oder zur anderen Seite des Aufnahmebehälters austragen zu können, beispielsweise wenn dieser in ein Fahrzeug eingegliedert ist, sollten an beiden gegenüberliegenden Seiten des Aufnahmebehälters Austragöffnungen, jeweils mit Dosierschieber und Verschlussklappe, vorgesehen sein.

Um ein Austreten des Schüttgutes seitlich der Verschlussklappe zu verhindern, und auch aus Sicherheitsgründen gegen Hineingreifen in den Aufnahmebehälter, sollten beiderseits der Verschlussklappe Faltenbälge oder über Gelenke oder Gummiteile verbundene Metallplatten vorgesehen sein. Die Beweglichkeit dieser Abschirmeinrichtungen muss das Verstellen der Verschlussklappe zwischen ihren beiden Endpositionen problemlos zulassen.

Schließlich ist es aus Sicherheitsgründen zweckmäßig, die Breite der Verschlussklappe so groß zu wählen, dass diese an beiden Seiten der Austragöffnung einen Sicherheitsabstand definiert, wie er den behördlichen Vorschriften entspricht, z.B. mindestens 230 mm bis zum gefährlichen äußersten Umfang des Förder-Mischelementes.

Anhand der Zeichnung werden Ausführungsformen des Erfindungsgegenstandes erläutert. Es zeigen:
- Fig: 1: eine Vorrichtung zum Mischen und Austragen von Schüttgut, integriert in ein Fahrzeug, in einer teilweisen Querschnittsansicht, wobei an der linken Seite der Vorrichtung Öffnungseinrichtungen geschlossen, an der rechten Seite hingegen geöffnet sind,
- Fig. 2: eine vergrößerte Darstellung eines Teils der Vorrichtung, entsprechend der rechten Seite in Fig. 1,
- Fig. 3: eine vergrößerte Darstellung der Komponenten der Vorrichtung von Fig. 1, an deren rechten Seite, in einer anderen Stellung,
- Fig. 4: eine Ansicht entsprechend Fig. 2, einer anderen Ausführungsform,
- Fig. 5: eine Ansicht entsprechend der von Fig. 3, zu der anderen Ausführungsform,
- Fig. 6: eine um 90° gedrehte Ansicht zu Fig. 2, und
- Fig. 7: ein Detail in einem Schnitt.

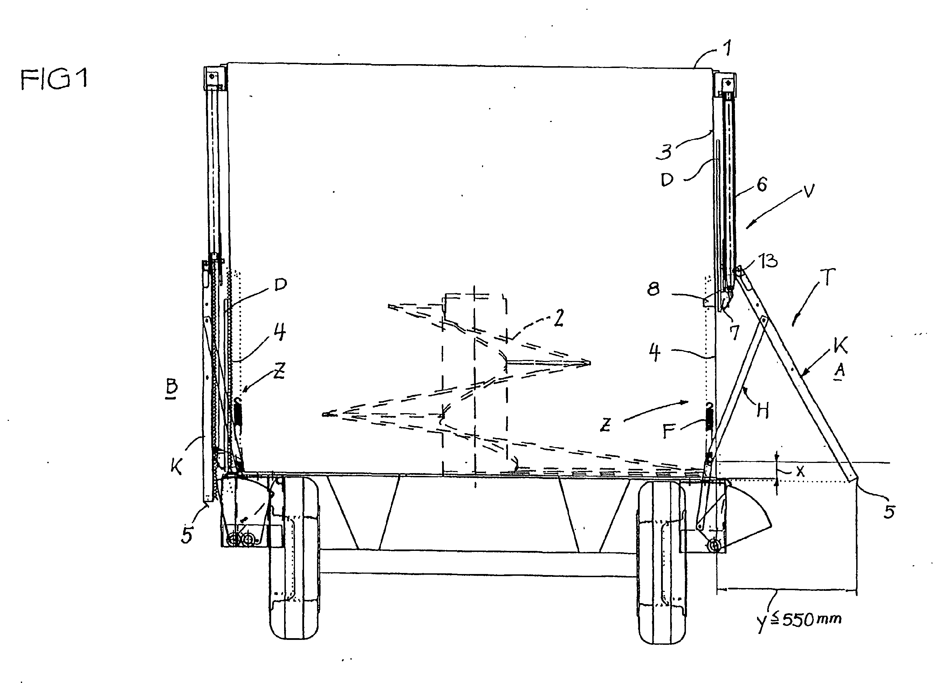

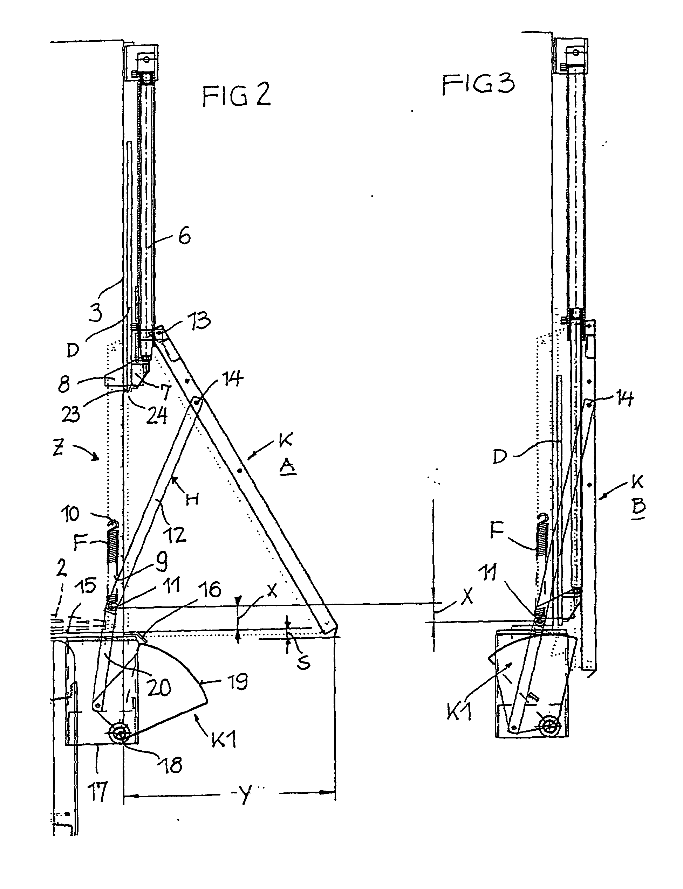

In Fig. 1 ist auf einem mit einem Fahrgestell versehenen, sogenannten Futter-Mischverteilwagen eine Vorrichtung V zum Mischen und Austragen von Schüttgut, insbesondere kurz- und langfasrigen Silagegut, gezeigt, die einen Aufnahmebehälter 1 und bei der gezeigten Ausführungsform im Aufnahmebehälter 1 eine um eine im wesentlichen vertikale Achse drehbare Schnecke mit kegelstumpfförmiger Hüllfläche als Misch- und Förderelement 2 auf dem Behälterboden 15 aufweist In sich gegenüberliegenden Behälterwänden 3 sind fensterartige Austragöffnungen 4 geformt, durch welche wahlweise zur einen oder anderen Seite Schüttgut ausgetragen werden kann. Jeder Austragöffnung 4 ist ein Dosierschieber D und ein in diesem Fall als Verschlussklappe K ausgebildetes Schutzelement T zugeordnet. Der Dosierschieber wird mittels einer Verstellvorrichtung 6 zwischen der in Fig. 1 rechts gezeigten Öffnungsstellung und der in Fig. 1 links gezeigten Schließstellung verstellt. Die Verschlussklappe K, die beispielsweise an einer oberhalb der Austragöffnung 4 außenliegenden Schwenkachse 13 schwenkbar gehalten ist, wird mittels eines Zwangsbetätigungsmechanismus Z zwischen der in Fig. 1 rechts gezeigten vollen Schutz- oder Aufschwenkstellung A und der in Fig. 1 links gezeigten vollen Zuschwenkstellung B hin- und herbewegt (z.B. geschwenkt). Die Verstelleinrichtung 6 greift mit einer Konsole 7 am Dosierschieber an, der auch einen nach innen in die Austragöffnung 4 ragenden Anschlag 8 nahe seinem unteren Rand aufweist. Der untere Rand der Verschlussklappe K ist mit 5 bezeichnet. Er liegt in der in Fig. 1 rechts gezeigten vollen Aufschwenkstellung tiefer als der Innenboden 15 des Aufnahmebehälters 1 (Fig. 2, Bezugszeichen S). Im Zwangsbetätigungsmechanismus Z ist eine Öffnungsfeder F vorgesehen, die einen Öffnungshebel H der Verschlussklappe K betätigt. Mit Hilfe des Zwangsbetätigungsmechanismus Z wird die Verschlussklappe K aus der vollen Zuschwenkstellung B in die volle Aufschwenkstellung A verstellt, sobald der Dosierschieber einen anfänglichen, kleinen Öffnungshub x (nur wenige Zentimeter) aus seiner Schließstellung ausgeführt hat. Der untere Rand 5 der Verschlussklappe K befindet sich dann in einem Sicherheitsabstand Y gleich oder größer 550 mm von der Austragöffnung 4 bzw. dem äußersten Teil des Misch- oder Förderelements 2 im Aufnahmebehälter 1.

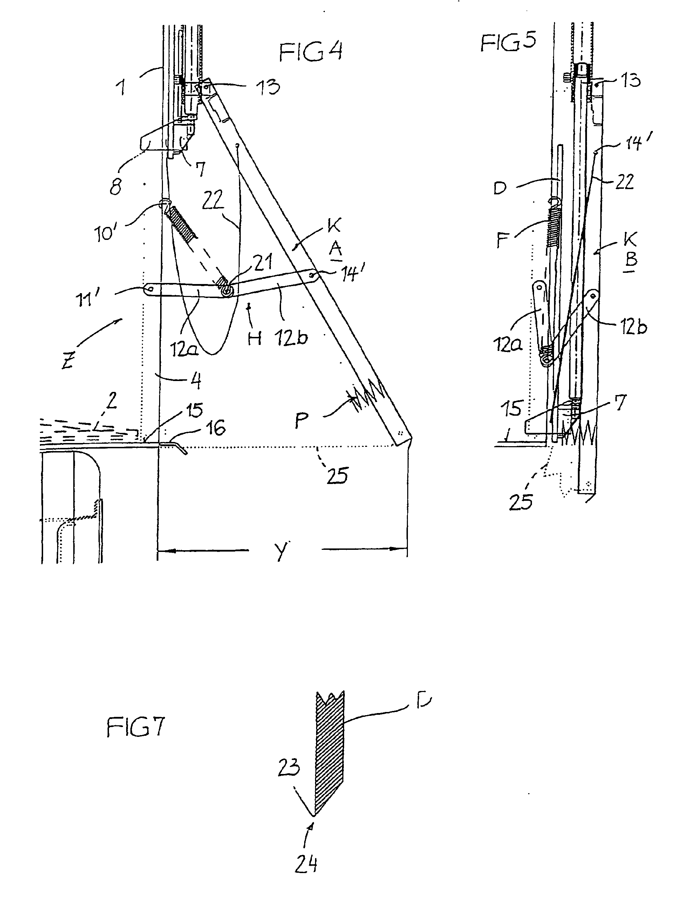

In Fig. 2 ist als Option eine unterhalb der Austragöffnung 4 verstellbar angeordnete Ablenkklappe K1 vorgesehen, die sich zwischen den Positionen der Fig. 2 und 3 hin- und herverstellen lässt, und dazu dient, aus der Austragöffnung 4 austretendes Schüttgut nach außen unten zu leiten. Die Ablenkklappe K1 ist nicht unbedingt erforderlich, kann bei Vorhandensein jedoch beispielsweise eine starke Verschmutzung der Räder verhindern.

Der Zwangsbetätigungsmechanismus Z in Fig. 2 hat als Öffnungshebel A einen einteiligen langen Hebel 12, der mit seinem unteren innenliegenden Ende in einer Führung 9 in etwa vertikal geführt sein kann. In der gezeigten Ausführungsform übernimmt ein mit dem Hebel 12 gekoppelter Stellhebel 20 diese Führung. Dazu durchsetzt der Stellhebel 20 ein Langloch 9 im Behälterboden 15. Die Öffnungsfeder F ist bei 10 am Aufnahmebehälter 1 bzw. der Führung 9 verankert und erstreckt sich zum unteren Ende des Hebels 12 bzw. zu einem dort angeordneten Nocken 11. Der Nocken 11 ist auf den Bewegungsweg des Anschlags 8 am Dosierschieber D ausgerichtet und liegt in der vollen Aufschwenkstellung der Verschlussklappe K mit dem Abstand x oberhalb der Ebene des Innenbodens 15 des Aufnahmebehälters. Der Abstand x beträgt nur wenige Zentimeter und entspricht dem anfänglichen Öffnungshub des Dosierschiebers aus seiner Schießstellung, z.B. ca. 50 mm. Der Hebel 12 ist mit seinem oberen Ende in einem Schwenklager 14 mit der Verschlussklappe K verbunden, wobei sich das Schwenklager 14 relativ nahe bei der oberen Schwenkachse 13 befindet, d.h. in etwa beim ersten Viertel der Länge der Verschlussklappe K, ausgehend von der Schwenkachse 13. Im unteren Randbereich der Austragöffnung kann eine Leiste 16 vorgesehen sein, die gegebenenfalls mit dem Dosierschieber D zum Abschneiden eines Schüttgutstranges zusammenarbeitet, wofür der Dosierschieber D an seinem unteren Rand 23 mit einer schneidenartigen oder abgeschrägten Stanzkante 24 ausgebildet ist.

Die Ablenkklappe K1 ist in einem kastenartigen Unterbau 17 an einer tiefliegenden Schwenkstelle 18 schwenkbar gelagert und besitzt eine schräge oder konvex gekrümmte Ablenkfläche 19, die in der ausgeschwenkten Position der Ablenkklappe K1 (Fig. 2) in etwa die Leiste 16 fortsetzt, in der eingeschwenkten Position gemäß Fig. 3 hingegen hinter die Kontur der Verstelleinrichtung 6 zurückgetreten ist. Zur Betätigung der Ablenkklappe K1 ist diese über den Stellhebel 20 mit dem Nocken 11 gekoppelt. Die Ablenkklappe K1 könnte alternativ einen eigenen Verstellmechanismus haben.

Die Relativpositionen des Anschlags 8 und des Nockens 11 in Hochrichtung sind so gewählt, dass die Verschlussklappe K in der Schließstellung des Dosierschiebers D in die volle Zuschwenkstellung B von Fig. 3 gezogen ist. Sobald der Dosierschieber D nach oben verstellt wird, zieht die Öffnungsfeder F den Nocken 11 und damit den Öffnungshebel H nach oben, wobei diese Bewegung durch die Anlenkung des Hebels 12 relativ hoch oben an der Verschlussklappe K ins Große übersetzt wird. Sobald der Dosierschieber D über den anfänglichen Öffnungshub x von beispielsweise 50 mm verstellt worden ist, hat die Öffnungsfeder F über den Öffnungshebel H die Verschlussklappe K bereits in die volle Ausschwenkstellung A von Fig. 2 gebracht. Die volle Ausschwenkstellung kann durch nicht gezeigte Begrenzungsanschläge definiert sein. Die weitere Öffnungsbewegung des Dosierschiebers D hat keinen Einfluss mehr auf die Verschlussklappe K.

Ist die Ablenkklappe K1 vorgesehen, so wird diese innerhalb des anfänglichen Öffnungshubes x des Dosierschiebers K, ebenfalls über die Öffnungsfeder F, in die ausgeschwenkte Position der Fig. 2 gebracht.

Wird der Dosierschieber D aus seiner vollen oder einer mittleren Öffnungsstellung wieder in Richtung auf seine volle Schließstellung verstellt, dann hat dies keinen Einfluss auf die Verschlussklappe K oder die gegebenenfalls vorgesehene Ablenkklappe K1. Erst wenn der Dosierschieber nur mehr um das Maß x vom Behälterboden 15 beabstandet ist, gelangt der Anschlag 8 zur Zusammenarbeit mit dem Nocken 11. Der Anschlag 8 bildet eine Mitnehmerkupplung, die nur in Schließrichtung des Dosierschiebers mit dem Zwangsbetätigungsmechanismus Z zusammenarbeitet und dann in einer zügigen und schnellen Bewegung die Verschlussklappe K in die volle Zuschwenkstellung gemäß Fig. 3 zieht

In Fig. 4 weist der Zwangsbetätigungsmechanismus Z einen aus den Teilen 12a und 12b bestehenden Öffnungshebel H auf. Die Hebelteile 12a, 12b sind mit ihren einen Enden bei 11' bzw. 14' am Aufnahmebehälter und an der Verschlussklappe K schwenkbar gelagert und miteinander bei 21 abknickbar verbunden. In der Abknickverbindung 21 ist zweckmäßigerweise eine Knickbeschränkung vorgesehen, so dass die Hebelteile 12a, 12b nur in die in Fig. 4 gezeigte schwache Knicklage bringbar sind. Die Öffnungsfeder F, die hier höherliegend angeordnet ist als in Fig. 2, ist bei 10' am Aufnahmebehälter verankert und greift im Bereich der Knickverbindung 21 an dem Öffnungshebel H an. Die Öffnungsfeder F hat die Aufgabe, die Verschlussklappe K in die in Fig. 4 gezeigte volle Aufschwenkstellung A zu bringen und in dieser zu halten. Zum Bewegen der Verschlussklappe K in die volle Zuschwenkstellung B gemäß Fig. 5 ist ein Zugelement 22 vorgesehen, das biegsam aber im wesentlichen undehnbar sein sollte (Kabel, Seilzug, Kette oder generell am Dosierschieber D verankert und mit dem anderen Ende an der Verschlussklappe K, und zwar dort zweckmäßigerweise nahe bei der Schwenkachse 13.

Weiterhin ist in den Fig. 4 und 5 angedeutet, dass in der vollen Zuschwenkstellung B der Verschlussklappe V gemäß Fig. 5 wenigstens ein Schließdämpfer P wirksam ist, der z.B. als Puffer, Feder oder Gummidämpfer ausgebildet und an der Verschlussklappe K oder am Aufnahmebehälter 1 angebracht sein kann. Gegebenenfalls sind an der Verschlussklappe K zwei Schließdämpfer P vorgesehen.

Die gestreckte Länge des Zugelementes 22 (Fig. 5) ist so bemessen, dass die Verschlussklappe K erste gegen Ende der Schließbewegung des Dosierschiebers D in die volle Zuschwenkstellung gemäß Fig. 5 gezogen wird, hingegen wie in Fig. 2 bereits in ihre volle Aufschwenkstellung verstellt wird, sobald der Dosierschieber seinen anfänglichen kleinen Öffnungshub x ausführt. Zum Verschwenken in die volle Aufschwenkstellung zieht die Öffnungsfeder F die Hebelteile 12a, 12b aus der in Fig. 5 gezeigten zusammengefalteten Stellung in die in Fig. 4 gezeigte Stellung.

In der Ausführungsform der Fig. 4, 5 ist keine Ablenkklappe K1 wie in den Fig. 2 und 3 vorgesehen. Es wäre jedoch möglich, auch bei dieser Ausführungsform eine Ablenkklappe vorzusehen. Generell ist die Verschlussklappe K an beiden Längsseiten über Faltenbälge 25 oder Metallplatten oder dgl. mit dem Aufnahmebehälter 1 verbunden ist, wobei die Metallplatten durch Gelenke oder Gummiteile zusammenfaltbar oder ineinanderschiebbar sind. Damit soll verhindert werden, dass Schüttgut seitlich unkontrolliert herausfällt und dass von außen seitlich um die Verschlussklappe K in das Innere zum Misch- und Förderelement 2 gegriffen werden kann.

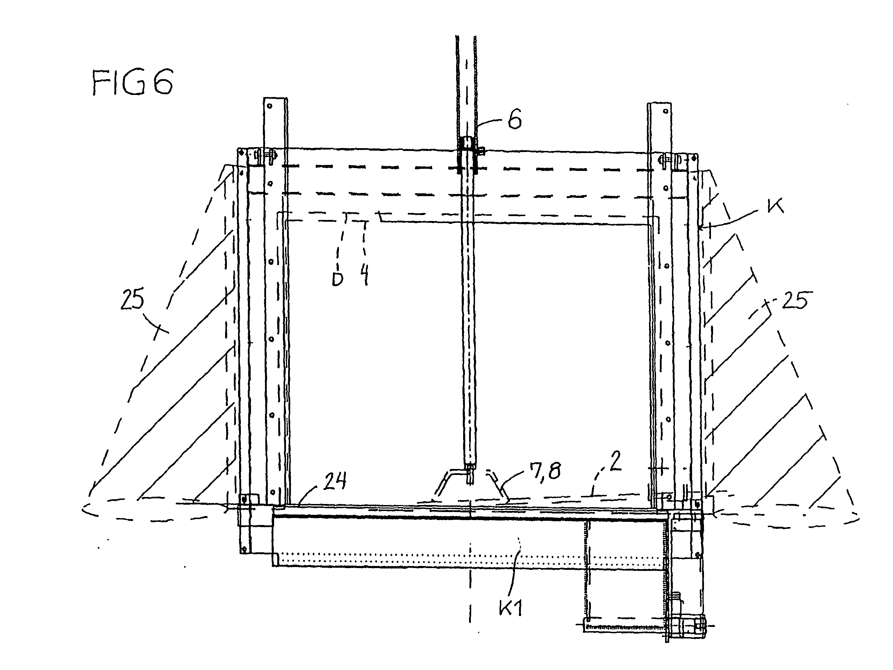

In Fig. 6 ist zu sehen, dass die Verschlussklappe K wesentlich breiter ist als die Austragöffnung 4, so dass auch seitlich ein erforderlicher Sicherheitsabstand zum gefährlichen Misch- und Förderelement 2 eingehalten wird, z.B. mindestens 230 mm. Die Faltenbälge 25 decken an den Längsseiten der Verschlussklappe K ab. Der Dosierschieber D, der beispielsweise die Form einer rechteckigen oder quadratischen Platte hat, ist kleiner als die Verschlussklappe K.

Gemäß Fig. 2 und 7 ist der untere Rand 23 des Dosierschiebers D als schneidenartiger oder abgeschrägter Stanzrand 24 ausgebildet ist, der mit der Leiste 16 zusammenarbeiten kann. Zweckmäßigerweise ist der Stanzrand 24 von außen nach unten innen abgeschrägt.

Bei allen Ausführungsformen ist angedeutet, dass der Dosierschieber zumindest den Zwangsbetätigungsmechanismus für die Verschlussklappe K auslöst oder sogar betätigt. Alternativ wäre es möglich, den Zwangsbetätigungsmechanismus Z durch die Verstelleinrichtung 6 zu betätigen oder auszulösen. D.h., die Verschlussklappe K könnte bereits dann in ihre volle Ausschwenkposition A verstellt werden, wenn der Dosierschieber nur wenige Millimeter aus seiner vollen Schließstellung in Richtung zur Öffnungsstellung bewegt ist. Ferner wäre es möglich, die Verschlussklappe trapezförmig auszubilden, wobei der Unterrand 5 der Verschlussklappe die längere Trapezbasis darstellt. Es könnte der Unterrand 5 der Verschlussklappe K auch dachförmig oder gerundet verlaufen, so dass die außenliegenden Ecken möglichst tief liegen. Anstelle der Faltenbälge aus elastischem Material könnten an den Seitenrändem der Verschlussklappe K Schwenkklappen in Schamieren angelenkt sein, die in der vollen Zuschwenkstellung fast plan außen auf der Behälterwand aufliegen. Die Verschlussklappe könnte als Schutzelement auch im wesentlichen parallel zur Behälterwand weggedrückt werden. Statt eines Dosierschiebers D könnte auch ein anderes Element zum Variieren der Austrittsgröße der Austragöffnung 4 benutzt werden.

Bei den beschriebenen Ausführungsformen werden folgende Vorteile erzielt

Der Zwangsbetätigungsmechanismus verstellt die Verschlussklappe bereits nach einem sehr kleinen Öffnungshub oder sogar vor einem Öffnungshub des Dosierschiebers in die volle Aufschwenkstellung, um den geforderten Sicherheitsabstand zum Misch- und Förderelement sicherzustellen.

Der Zwangsbetätigungsmechanismus kann auch die Ablenkklappe ausschwenken oder ausschieben, die den Silagegutstrom weiter von der Längsachse der Vorrichtung nach außen verlagert.

Verstopfungen der Austragöffnung durch eine verzögert aufschwenkende Verschlussklappe sind vermieden.

Die Sicherheitsfunktion der Verschlussklappe ist verbessert, indem diese auch in der vollen Ausschwenkposition bis unter den Boden des Aufnahmebehälters reicht.

Die Breite der Verschlussklappe ist so groß, dass auch an beiden Seiten der Verschlussklappe Sicherheitsabstände, z.B. 230 mm, gewährleistet sind.

Der Dosierschieber kann eingeklemmtes Silagegut beim Schließen durchstanzen und kommt so zuverlässig in volle Schließstellung, so dass auch das volle Schließen der Verschlussklappe gewährleistet ist.

Der Zwangsbetätigungsmechanismus arbeitet aktiv, so dass die Vorrichtung bei geschlossener Verschlussklappe die normale Durchfahrbreite hat. Als Öffnungsfeder könnte auch eine Gasdruckfeder oder ein hydraulischer oder pneumatischer Zylinder verwendet werden, oder ein Kabel.

Schließdämpfer können zum Mindern des Verschleißes und zur Lärmverhinderung vorgesehen sein.

Zweckmäßigerweise sind an beiden Seiten der Verschlussklappe Zwangsbetätigungsmechanismen vorgesehen.

Da der Dosierschieber die die Betriebsgefahr bedingende Öffnungsbewegung ausführt, wird der Zwangsbetätigungsmechanismus zweckmäßigerweise durch den Dosierschieber aktiviert.

## Patentansprüche

1. Vorrichtung (V) zum Mischen und Austragen von Schüttgut, insbesondere kurz- und/oder langfasrigem Silagegut, mit einem Aufnahmebehälter (1), der wenigstens ein Förder- und Mischelement (2) und in der Behälterwand (3) wenigstens eine Austragöffnung (4) aufweist, wobei relativ zur Austragöffnung (4) ein Dosierschieber (D) aus einer Schließstellung verstellbar und vor der Austragöffnung (4) ein koordiniert mit dem Dosierschieber (D) aus einer Ruhe- in eine Schutzstellung und zurück bewegbares Schutzelement (T) vorgesehen ist, **dadurch gekennzeichnet, dass** für das Schutzelement (T) ein Zwangsbetätigungsmechanismus (Z) vorgesehen ist, mit dem es höchstens über einen anfänglichen Öffnungshub (x) des Dosierschiebers (D) in die volle Schutzstellung (A) bringbar und über den weiteren Öffnungshub des Dosierschiebers (D) in dieser haltbar ist.

2. Vorrichtung nach Anspruch 1, **dadurch gekennzeichnet, dass** das Schutzelement (T) eine schwenkbare Verschlussklappe (K) ist

3. Vorrichtung nach Anspruch 2, **dadurch gekennzeichnet, dass** die Verschlussklappen-Unterkante (5) in der vollen Aufschwenkposition (A) der Verschlussklappe (K) von dem hinter der Austragöffnung (4) positionierten Förder- und Mischelement (2) mit mindestens einem vorschriftsgemäßen Sicherheitsabstand (Y) beabstandet ist, vorzugsweise mit mindestens 550 mm.

4. Vorrichtung nach Anspruch 1, **dadurch gekennzeichnet, dass** der Zwangsbetätigungsmechanismus (Z) mittels des Dosierschiebers (D) oder einer Verstellvorrichtung (6) des Dosierschiebers (D) betätigbar oder zumindest auslösbar ist.

5. Vorrichtung nach Anspruch 2, **dadurch gekennzeichnet, dass** die Verschlussklappe (K) mittels des Zwangsbetätigungsmechanismus (Z) in die Zuschwenkstellung (B) bringbar und dieser haltbar ist.

6. Vorrichtung nach Anspruch 2, **dadurch gekennzeichnet, dass** der Zwangsbestätigungsmechanismus (Z) eine am Aufnahmebehälter (1) verankerte, in der Schließstellung der Verschlussklappe (K) vorgespannte Öffnungsfeder (F) und einen an der Verschlussklappe in einer Schwenklagerung (14, 14') schwenkbar abgestützten, von der Öffnungsfeder (F) beaufschlagten Öffnungshebel (H) aufweist, und dass zwischen dem Öffnungshebel (H) oder dem Zugende der Öffnungsfeder (F) oder der Verschlussklappe (K) und dem Dosierschieber (D) oder dessen Verstellantrieb (6) eine ausschließlich in Schließrichtung des Dosierschiebers wirksame Mitnehmerkupplung (8) vorgesehen ist.

7. Vorrichtung nach Anspruch 6, **dadurch gekennzeichnet, dass** der Offnungshebel (H) mit einem Ende in etwa parallel zur Dosierschieber-Verstellrichtung geführt ist und sich zur Hubübersetzung ins Größere von unten nach oben zum Schwenklager (14) an der Verschlussklappe (K) erstreckt, das nahe der oben liegenden Schwenkachse (13) der Verschlussklappe positioniert ist

8. Vorrichtung nach den Ansprüchen 6 und 7, **dadurch gekennzeichnet, dass** am Dosierschieber (D) ein von oben auf einen in der vollen Aufschwenkstellung (A) der Verschlussklappe (K) in der Nähe des unteren Austragöffnungsrandes (16) liegenden Gegenanschlag (11) des Öffnungshebels (H) ausgerichteter Anschlag (8) vorgesehen ist.

9. Vorrichtung nach Anspruch 7, **dadurch gekennzeichnet, dass** ein Aufschwenk-Begrenzungsanschlag für die Verschlussklappe (K) bzw. den Öffnungshebel (H) vorgesehen ist

10. Vorrichtung nach Anspruch 6, **dadurch gekennzeichnet, dass** der Öffnungshebel (H) aus zwei abknickbar miteinander verbundenen Hebelteilen (12a, 12b) besteht, deren einer am Aufnahmebehälter (1) und deren anderer an der Verschlussklappe (K) schwenkbar abgestützt ist, dass die Öffnungsfeder (F) in etwa im Verbindungsbereich (21) der Hebelteile angreift, und dass an dem Dosierschieber (D) und der Verschlussklappe (K) ein biegsames Zugelement (22) wie ein Kabel oder eine Kette befestigt ist, dessen gestreckte Wirklänge in der Schließstellung des Dosierschiebers (D) die volle Zuschwenkstellung (B) der Verschlussklappe (K) definiert.

11. Vorrichtung nach Anspruch 1, **dadurch gekennzeichnet, dass** unterhalb der Austragöffnung (4) eine baulich vom Schutzelement (T) getrennte Ablenkklappe (K1) vorgesehen ist.

12. Vorrichtung nach Anspruch 11, **dadurch gekennzeichnet, dass** die Ablenkklappe (K1) zwischen einer in etwa mit der Außenkontur des Aufnahmebehälters (1) abschließenden Position und einer seitlich nach außen unten über die Außenkontur vorstehenden Position verstellbar, vorzugsweise wirkungsmäßig mit der Verschlussklappe (K) gekoppelt, ist.

13. Vorrichtung nach Anspruch 11, **dadurch gekennzeichnet, dass** die Ablenkklappe (K1) eine schräge oder konvex gekrümmte Ablenkfläche (19) aufweist.

14. Vorrichtung nach Anspruch 11, **dadurch gekennzeichnet, dass** die Ablenkklappe (K1) schwenkverstellbar und mit dem Zwangsbetätigungsmechanismus (Z) gekoppelt ist, vorzugsweise über einen mit dem Öffnungshebel (H) gekoppelten, ein führendes Langloch (9) im Boden (15) durchsetzenden Stellhebel (20).

15. Vorrichtung nach Anspruch 2, **dadurch gekennzeichnet, dass** an der Verschlussklappe (K) oder am Aufnahmebehälter ein federnder Schließ-Dämpfer (P) für die Verschlussklappe (K) vorgesehen ist, vorzugsweise in Form einer Feder und/oder eines Gummistoppers.

16. Vorrichtung nach Anspruch 2, **dadurch gekennzeichnet, dass** die Verschlussklappen-Unterkante (5) in der vollen Aufschwenkstellung (A) tiefer liegt als der untere Austragöffnungsrand (16) bzw. der hinter dem Austragöffnungsrand (16) liegende Behälterboden (15).

17. Vorrichtung nach Anspruch 1, **dadurch gekennzeichnet, dass** der Dosierschieber (D) an seinem unteren Rand (23) mit einem schneidenartigen oder abgeschrägten Stanzrand (24) ausgebildet ist.

18. Vorrichtung nach wenigstens einem der vorhergehenden Ansprüche, **dadurch gekennzeichnet, dass** an beiden Seiten der Austragsöffnung (4) jeweils ein Zwangsbetätigungsmechanismus (Z) vorgesehen ist

19. Vorrichtung nach Anspruch 1, **dadurch gekennzeichnet, dass** der Aufnahmebehälter (1) an zwei sich gegenüberliegenden Seiten jeweils eine Austragsöffnung (4) aufweist.

20. Vorrichtung nach Anspruch 2, **dadurch gekennzeichnet, dass** beiderseits der Verschlussklappe (K) am Aufnahmebehälter (1) und der Verschlussklappe (K) festgelegte Faltenbälge oder über Gelenke oder Gummiteile verbundene Platten als seitliche Zugriffsabdeckungen (25) vorgesehen sind.

21. Vorrichtung nach Anspruch 2, **dadurch gekennzeichnet, dass** die Breite der Verschlussklappe (K) an beiden Verschlussklappenseiten einen Sicherheitsabstand von mindestens 230 mm zum äußersten Punkt des Förder- und Mischelementes (2) definiert.

## Revendications

1. Dispositif (V) de mélange et de décharge de matières en vrac, en particulier de matières d'ensilage à fibres courtes et/ou longues, comprenant un réservoir (1) qui comporte au moins un élément de mélange et de transport (2) et au moins une ouverture de décharge (4) dans la paroi (3) du réservoir, un tiroir de dosage (D) pouvant être déplacé à partir d'une position de fermeture par rapport à l'ouverture de décharge (4) et un élément de protection (T), pouvant être amené et ramené en coordination avec le tiroir de dosage (D) d'une position de repos dans une position de protection, étant prévu devant l'ouverture de décharge (4), **caractérisé en ce qu'**il est prévu pour l'élément de protection (T) un mécanisme de commande forcée (Z), par lequel l'élément précité peut être amené au maximum dans la position de protection (A) totale par l'intermédiaire d'une course d'ouverture initiale (x) du tiroir de dosage (D) et être maintenu dans cette position par la course d'ouverture ultérieure du tiroir de dosage (D).

2. Dispositif suivant la revendication 1, **caractérisé en ce que** l'élément de protection (T) est un volet de fermeture pivotant (K).

3. Dispositif suivant la revendication 2, **caractérisé en ce que** le bord inférieur (5) du volet de fermeture, dans la position d'ouverture totale (A) du volet de fermeture (K), est distant de l'élément de transport et de mélange (2), positionné derrière l'ouverture de décharge (4), d'au moins une distance de sécurité (Y) conforme aux prescriptions, d'au moins 550 mm de préférence.

4. Dispositif suivant la revendication 1, **caractérisé en ce que** le mécanisme de commande forcée (Z) est actionnable ou au moins déclenchable au moyen du tiroir de dosage (D) ou d'un dispositif de réglage (6) du tiroir de dosage (D).

5. Dispositif suivant la revendication 2, **caractérisé en ce que** le volet de fermeture (K) peut être amené au moyen du mécanisme de commande forcée (Z) dans la position de fermeture (B) et être maintenu dans cette dernière.

6. Dispositif suivant la revendication 2, **caractérisé en ce que** le mécanisme de commande forcée (Z) comporte un ressort d'ouverture (F) ancré sur le réservoir (1) et précontraint dans la position de fermeture du volet de fermeture (K), et un levier d'ouverture (H) supporté avec une possibilité de pivotement sur le volet de fermeture dans un palier pivotant (14, 14') et sollicité par le ressort d'ouverture (F), et **en ce qu'**un entraînement d'accouplement (8) actif exclusivement dans la direction de fermeture du tiroir de dosage, est prévu entre le levier d'ouverture (H) ou l'extrémité de traction du ressort d'ouverture (F) ou le volet de fermeture (K) et le tiroir de dosage (D) ou la commande de déplacement (6) de ce dernier.

7. Dispositif suivant la revendication 6, **caractérisé en ce que** le levier d'ouverture (H) est guidé par une extrémité à peu près parallèlement à la direction de déplacement du tiroir de dosage et s'étend pour amplifier la course du bas vers le haut en direction du palier pivotant (14) sur le volet de fermeture (K), lequel palier est positionné au voisinage de l'axe de pivotement (13) situé en partie haute du volet de fermeture.

8. Dispositif suivant les revendications 6 et 7, **caractérisé en ce qu'**il est prévu, sur le tiroir de dosage (D), une butée (8) dirigée à partir du haut sur une butée antagoniste (11) du levier d'ouverture (H), située au voisinage du bord d'ouverture de décharge inférieur (16) dans la position d'ouverture totale du volet de fermeture (K).

9. Dispositif suivant la revendication 7, **caractérisé en ce qu'**il est prévu une butée de limitation d'ouverture pour le volet de fermeture (K) ou le levier d'ouverture (H).

10. Dispositif suivant la revendication 6, **caractérisé en ce que** le levier d'ouverture (H) est constitué de deux parties de levier (12a, 12b), dont l'une est supportée de façon pivotante sur le réservoir (1) et l'autre sur le volet de fermeture (K), que le ressort d'ouverture (F) agit à peu près dans la zone de jonction (21) des parties de levier, et qu'un élément de traction flexible (22), tel qu'un câble ou une chaîne, est fixé sur le tiroir de dosage (D) et sur le volet de fermeture (K), la longueur active de cet élément de traction définissant dans la position de fermeture du tiroir de dosage (D)) la position de fermeture totale (B) du volet de fermeture (K).

11. Dispositif suivant la revendication 1, **caractérisé en ce qu'un** volet déflecteur (K1), séparé au plan de la construction de l'élément de protection (T), est prévu au-dessous de l'ouverture de décharge (4).

12. Dispositif suivant la revendication 11, **caractérisé en ce que** le volet déflecteur (K1) peut être déplacé, de préférence couplé en liaison active avec le volet de fermeture (K), entre une position à peu près alignée sur le contour extérieur du réservoir (1) et une position dépassant du contour extérieur latéralement vers l'extérieur et vers le bas.

13. Dispositif suivant la revendication 11, **caractérisé en ce que** le volet déflecteur (K1) présente une surface de déflexion (19) oblique ou de courbure convexe.

14. Dispositif suivant la revendication 11, **caractérisé en ce que** le volet déflecteur (K1) est réglable par pivotement et couplé au mécanisme de commande forcée (Z), de préférence par l'intermédiaire d'un levier de réglage (20) traversant un trou oblong de guidage (9) dans le fond (15) et couplé au levier d'ouverture (H).

15. Dispositif suivant la revendication 2, **caractérisé en ce qu'**un amortisseur de fermeture élastique (P), de préférence en forme d'un ressort et/ou d'une butée en caoutchouc, est prévu pour le volet de fermeture (K) sur ce volet (K) ou sur le réservoir.

16. Dispositif suivant la revendication 2, **caractérisé en ce que** le bord inférieur (5) du volet de fermeture se situe en position totale d'ouverture (A) à un niveau plus bas que le bord (16) de l'ouverture de décharge ou que le fond (15) du réservoir situé derrière le bord (16) de l'ouverture de décharge.

17. Dispositif suivant la revendication 1, **caractérisé en ce que** le tiroir de dosage (D) est réalisé sur son bord inférieur (23) avec un bord de découpe (24) en forme de tranchant ou chanfreiné.

18. Dispositif suivant l'une au moins des revendications précédentes, **caractérisé en ce qu'**un mécanisme de commande forcée (Z) est prévu sur chacun des deux côtés de l'ouverture de décharge (4).

19. Dispositif suivant la revendication 1, **caractérisé en ce que** le réservoir (1) comporte une ouverture de décharge (4) sur chacun de deux côtés opposés.

20. Dispositif suivant la revendication 2, **caractérisé en ce que** des soufflets fixés de part et d'autre du volet de fermeture (K) sur le réservoir (1) ou des plaques assemblées par l'intermédiaire d'articulations ou de pièces en caoutchouc sont prévus en tant que recouvrements d'accès latéraux (25).

21. Dispositif suivant la revendication 2, **caractérisé en ce que** la largeur du volet de fermeture (K) sur les deux côtés de ce dernier définit une distance de sécurité d'au moins 230 mm par rapport au point extrême de l'élément de mélange et de transport (2).

## Claims

1. An apparatus (V) for mixing and discharging bulk material, in particular short-fibre and/or long-fibre silage material, with a receptacle (1) which has at least one conveyor and mixing element (2) and in the receptacle wall (3) at least one discharge opening (4), wherein a metering slide member (D) can be displaced from a closed position relative to the discharge opening (4) and in front of the discharge opening (4) a guard element (T) is provided which can move in a manner co-ordinated with the metering slide member (D) from an inoperative position into a guard position and back, **characterised in that** an automatic actuating mechanism (Z) is provided for the guard element (T), by which the guard element can be extended to its maximum by an initial opening travel (x) of the metering slide member (D) into the fully guarding position (A) and can be maintained therein via the further opening travel of the metering slide member (D).

2. An apparatus according to Claim 1, **characterised in that** the guard element (T) is a pivotable closure flap (K).

3. An apparatus according to Claim 2, **characterised in that** in the fully pivoted-open position (A) of the closure flap (K) the closure flap lower edge (5) is spaced apart from the conveyor and mixing element (2) positioned behind the discharge opening (4) by at least a stipulated safety distance (Y), preferably by at least 550 mm.

4. An apparatus according to Claim 1, **characterised in that** the automatic actuating mechanism (Z) can be actuated or at least triggered by means of the metering slide member (D) or an adjusting device (6) of the metering slide member (D).

5. An apparatus according to Claim 2, **characterised in that** the closure flap (K) can be brought into the pivoted-closed position (B) by means of the automatic actuating mechanism (Z) and can be maintained therein.

6. An apparatus according to Claim 2, **characterised in that** the automatic actuating mechanism (Z) has an opening spring (F), which is anchored on the receptacle (1) and is preloaded in the closed position of the closure flap (K), and has an opening lever (H) which is pivotably supported on the closure flap in a pivot mounting (14,14") and which is acted upon by the opening spring (F), and **in that** an entrainment coupling (8), which acts exclusively in the closing direction of the metering slide member, is provided between the opening lever (H) or the tension end of the opening spring (F) or the closure flap (K) and the metering slide member (D) or its adjusting device (6).

7. An apparatus according to Claim 6, **characterised in that** at one end the opening lever (H) is guided approximately parallel to the metering slide member adjusting device and for a step conversion of the travel it extends upwardly towards the pivot bearing (14) on the closure flap (K), which is positioned close to the upper pivot axis (13) of the closure flap.

8. An apparatus according to Claims 6 and 7, **characterised in that** a stop member (8) aligned from above with a counter-stop (11) of the opening lever (H), which in the fully pivoted-open position (A) of the closure flap (K) is situated in the vicinity of the lower discharge- opening edge (16), is provided on the metering slide member (D).

9. An apparatus according to Claim 7, **characterised in that** a pivoting-open limit stop is provided for the closure flap (K) or the opening lever (H).

10. An apparatus according to Claim 6, **characterised in that** the opening lever (H) comprises two lever portions (12a,12b) which are interconnected in a foldable manner, one of which portions is pivotably supported on the receptacle (1) and the other portion of which is pivotably supported on the closure flap (K), **in that** the opening spring (F) engages approximately in the connecting zone (21) of the lever portions, and **in that** a flexible tension element (22), such as a cable or a chain, is fastened to the metering slide member (D) and the closure flap (K), the effective extended length of which element defines in the closed position of the metering slide member (D) the fully pivoted-closed position (B) of the closure flap (K).

11. An apparatus according to Claim 1, **characterised in that** a deflector flap (K1) structurally separated from the guard element (T) is provided below the discharge opening (4).

12. An apparatus according to Claim 11, **characterised in that** the deflector flap (K1) is adjustable between a position approximately terminating at the outer contour of the receptacle (1) and a position projecting laterally outwards and downwards from the outer contour, preferably is coupled operatively with the closure flap. (K).

13. An apparatus according to Claim 11, **characterised in that** the deflector flap (K1) has an inclined or convexly curved deflecting surface (19).

14. An apparatus according to Claim 11, **characterised in that** the deflector flap (K1) is pivotably adjustable and is coupled with the automatic actuating mechanism (Z), preferably via an actuating lever (20) which is coupled with the opening lever (H) and which passes through a leading slot (9) in the bottom (15).

15. An apparatus according to Claim 2, **characterised in that** a resilient closing damper (P) for the closure flap (K) is provided on the closure flap (K) or on the receptacle, preferably in the form of a spring and/or a rubber stopper.

16. An apparatus according to Claim 2, **characterised in that** in the fully pivoted-open position (A) the lower edge (5) of the closure flap is situated lower down than the lower discharge-opening edge (16) and the receptacle bottom (15) situated behind the discharge-opening edge (16).

17. An apparatus according to Claim 1, **characterised in that** at its lower edge (23) the metering slide member (D) is formed with a cutter-like or bevelled stamping edge (24).

18. An apparatus according to at least one of the preceding Claims, **characterised in that** a respective automatic actuating mechanism (Z) is provided on either side of the discharge opening (4).

19. An apparatus according to Claim 1, **characterised in that** the receptacle (1) has a respective discharge opening (4) on two opposite sides.

20. An apparatus according to Claim 2, **characterised in that** bellows, which are located on the receptacle (1) and the closure flap (K), or plates, which are connected via joints or rubber members, are provided on either side of the closure flap (K) as lateral access covers (25).

21. An apparatus according to Claim 2, **characterised in that** the width of the closure flap (K) on both closure flap side defines a safety distance of at least 230 mm from the outermost point of the conveyor and mixing element (2).
